# EUROPÄISCHE PATENTSCHRIFT

(11) **EP 2 319 758 B1**
(45) Veröffentlichungstag und Bekanntmachung des Hinweises auf die Patenterteilung: **20.04.2016**
(21) Anmeldenummer: 10188443.5
(22) Anmeldetag: 21.10.2010
(51) Int. Cl.: B63H 25/00, B63H 25/04

(54) **Anordnung zur Ermittlung einer auf ein Ruder wirkenden Kraft**
Assembly for calculating a force affecting a rudder
Agencement d'établissement d'une force s'exerçant sur un gouvernail

(30) Priorität: 06.11.2009 DE 102009053201; 21.01.2010 DE 102010001102
(43) Veröffentlichungstag der Anmeldung: 11.05.2011
(60) Teilanmeldung: 14198130.8
(73) Patentinhaber: Becker Marine Systems GmbH & Co. KG, 21079 Hamburg (DE)
(72) Erfinder: Lehmann, Dirk, 21423 Winsen / Luhe (DE)
(74) Vertreter: RGTH

(56) Entgegenhaltungen:
- WO-A1-2006/058232
- WO-A1-2007/016805
- US-A1- 2003 150 366
- US-B1- 6 371 038
- US-B1- 7 281 482

## Beschreibung

Die Erfindung betrifft eine Anordnung zur Ermittlung von auf ein Ruder wirkenden Kräften.

Es ist grundsätzlich bekannt, dass im maritimen Bereich viele Wasserfahrzeuge über Autopilotsysteme verfügen. Dies sind automatische Steuerungsanlagen, die häufig softwarebasierend und computerimplementiert ausgebildet sind und die die Wasserfahrzeuge während der Fahrt auf einem vorgegebenen Kurs halten. Derartige Autopilotsysteme verfügen normalerweise über Standpunkt-Referenz-Sensoren oder andersartige Positionsermittlungseinrichtungen, wie beispielsweise GPS-Empfänger, Kreiselkompasse, o. dgl. Darüber hinaus können dem Autopilotsystem andere Parameter zur Verfügung gestellt werden, die beispielsweise von lokalen Messeinrichtungen am Wasserfahrzeug ermittelt und weitergeleitet werden. Unter dem Begriff "Wasserfahrzeug" ist im vorliegenden Zusammenhang jedwedes Fahrzeug zu verstehen, das zur Fortbewegung auf dem oder im Wasser bestimmt ist (z. B. Schiffe, mobile Bohrinseln, etc.). Die Autopilotsysteme umfassen normalerweise ferner eine Steuereinrichtung, die zum Ansteuern der Manövrieranlage eines Wasserfahrzeuges ausgebildet ist. Manövrieranlagen, insbesondere bei Schiffen, können insbesondere eine Kombination aus einer Antriebseinheit, beispielsweise einem Schiffspropeller, und einer Steuereinheit, beispielsweise einer Ruderanlage mit einem verstellbaren Ruder, umfassen. Bei solchen Manövrieranlagen sind die Autopilotsysteme häufig insbesondere zur Ansteuerung bzw. Verstellung des Ruders ausgebildet und können somit den tatsächlichen Kurs des Wasserfahrzeuges auf Basis der dem Autopilotsystem zugeführten Parameter und der vorgegebenen Algorithmen berechnen.

Ferner sind aus dem Stand der Technik Dynamische Positioniersysteme für Wasserfahrzeuge bekannt. Diese sind im Allgemeinen computergesteuerte Systeme zur automatischen Positionierung von Wasserfahrzeugen, insbesondere Schiffen. Dynamisches Positionieren kann entweder absolut erfolgen - d. h., dass das Wasserfahrzeug an einen festen Punkt über dem Boden gehalten wird - oder relativ zu einem bewegten Objekt wie einem Schiff oder einem Unterwasserfahrzeug. Derartige dynamische Positionierungen werden beispielsweise häufig in der Offshore-Öl-Industrie für Bohrplattformen oder andere Offshore-Wasserfahrzeuge verwendet. Allerdings werden mittlerweile auch vermehrt Schiffe, beispielsweise Kreuzfahrtschiffe, mit Dynamischen Positioniersystemen ausgestattet. Diese Systeme können ferner zusätzlich Autopilotfunktionen beinhalten und können damit Wasserfahrzeuge auf einem bestimmten, vorgegebenen Kurs halten. Grundsätzlich können Wasserfahrzeuge auch ein Dynamisches Positioniersystem und zusätzlich ein separates Autopilotsystem aufweisen. Derartige Dynamische Positioniersysteme umfassen u. a. normalerweise Standpunkt-Referenz-Sensoren oder andersartige Positionsermittlungseinrichtungen, wie beispielsweise GPS-Empfänger, Kreiselkompasse, o. dgl. Diese Einrichtungen liefern dem Dynamischen Positioniersystem Wasserfahrzeugpositionsdaten. Andere derartige Einrichtungen können Bewegungsmelder sein, mit denen beispielsweise das Rollen oder Stampfen eines Schiffes festgestellt werden kann. Ebenso wie ein Autopilotsystem umfasst ein Dynamisches Positioniersystem eine Steuerungseinrichtung, die zur Ansteuerung der Manövrieranlage auf Basis der dem Dynamischen Positioniersystem zugeführten Parameter und der darin hinterlegten Algorithmen ausgebildet ist. Die Ansteuerung der Manövrieranlage erfolgt hier im Regelfall dergestalt, dass eine vorgegebene Position gehalten werden soll. Häufig sind Dynamische Positioniersysteme im Falle von Manövrieranlagen, die sowohl eine Ruderanlage als auch eine Antriebseinheit umfassen, in der Lage beide Teilanlagen anzusteuern. Sowohl die dynamischen Positioniersysteme als auch die Autopilotsysteme für Wasserfahrzeuge können unter den Oberbegriff automatische Steuerungssysteme für Wasserfahrzeuge subsumiert werden.

Darüber hinaus umfassen Dynamische Positioniersysteme normalerweise ferner mindestens eine Messeinrichtung zur Ermittlung von Messdaten von physikalischen Größen des Wasserfahrzeuges bzw. von auf das Wasserfahrzeug wirkenden physikalischen Größen. Ebenfalls können Autopilotsysteme derartige Messeinrichtungen umfassen. Hierbei ist es beispielsweise bekannt, mit Hilfe von als Windsensoren ausgebildeten Messeinrichtungen die auf das Schiff wirkende Windstärke zu bestimmen. Alternativ oder zusätzlich ist ferner bekannt den Wellengang mittels geeigneter Windeinrichtungen zu bestimmen. Insofern stellen die mindestens eine Messeinrichtung und die Mittel zur Ermittlung von Wasserfahrzeugpositionsdaten Informationen für eine zentrale Steuereinrichtung, beispielsweise einen Computer, in Bezug auf die Position des Schiffes und das Ausmaß und die Wirkungsrichtung gewisser Umweltkräfte zur Verfügung, die die Lage des Wasserfahrzeuges beeinflussen (können). Basierend auf diesen Parametern sowie auf Informationen über einen gewünschten Kurs berechnet eine Recheneinheit des Dynamischen Positioniersystems und/oder des Autopilotsystems, die integriert in die Steuereinrichtung ausgebildet sein kann, basierend auf einem oder mehreren vorgegebenen Algorithmen die notwendigen Ansteuerungsparameter, auf deren Basis die Steuerungseinrichtung Steuersignale an die Manövrieranlage des Schiffes bzw. des Wasserfahrzeuges weiterleitet und diese dadurch entsprechend beeinflusst. Hierdurch kann der gewünschte Kurs des Wasserfahrzeuges gehalten bzw. die vorgegebene Position erreicht bzw. gehalten werden.

Die Manövrieranlage eines Wasserfahrzeuges kann beispielsweise eine Ruderanlage und eine Antriebseinheit, insbesondere einen Antriebspropeller, umfassen. Die Ruderanlage umfasst wiederum im Allgemeinen ein Ruder und eine Ruderverstelleinrichtung, insbesondere eine Rudermaschine. Durch Ansteuerung der Verstelleinrichtung und der Antriebseinheit kann der Schub und der Ruderwinkel des Wasserfahrzeuges bzw. der Manövrieranlage verändert und somit die Fahrtrichtung und Geschwindigkeit des Wasserfahrzeuges beeinflusst werden.

US 2003/0150366 A1 beschreibt ein sogenanntes "Steer-by-wire" System für Wasserfahrzeuge, das Messdaten, wie bspw. die Ruderposition, zur Ermittlung eines Steuersignals berücksichtigt und in das eine Autopilot-Funktion integriert sein kann. Dafür kann das System verschiedene Sensoren, die nicht am Ruder angeordnet sind, aufweisen. Die Messdaten der Sensoren werden an eine Recheneinheit übermittelt, die unter Berücksichtigung der Messdaten ein Steuersignal zur Steuerung des Wasserfahrzeuges ausgibt.

Wird nun von bekannten Autopilotsystemen oder Dynamischen Positioniersystemen zu einem gegebenen Zeitpunkt festgestellt, dass aufgrund der vorliegenden Wasserfahrzeugpositions- und Messdaten der Kurs bzw. die Position des Wasserfahrzeuges verändert werden muss, wird zwar die Manövrieranlage angesteuert und die Antriebsleistung (Schub) und/oder der Ruderwinkel verändert, häufig jedoch nicht in optimaler Höhe. Hierdurch wird der Kurs des Wasserfahrzeuges oft über den gewünschten Kurs hinaus verändert, bzw. die gewünschte Position nicht unmittelbar erreicht, so dass dann wieder gegengesteuert werden muss. In der Praxis kommt es hierdurch zu einem häufigen Ansteuern bzw. Verstellen des Ruderwinkels sowie gegebenenfalls zu einer stetigen Leistungsveränderung des Antriebspropellers innerhalb relativ kurzer Zeitabstände. Dieser Vorgang wird auch als "Schalthysterese" bezeichnet und führt dazu, dass die Manövrieranlage über Gebühr beansprucht wird, bzw. sich der gewünschte Kurs bzw. die gewünschte Position erst verzögert einstellt. Mit anderen Worten kann es zur erhöhten Abnutzung bzw. erhöhtem Verschleiß der Manövrieranlage kommen und dazu führen, dass der vom Schiff eingeschlagene Kurs oft nicht optimal ist. Ferner wird im Falle von Autopilotsystemen durch die häufigen Ruderausschläge die benötigte Vortriebsenergie des Wasserfahrzeuges erhöht.

Daher ist es die Aufgabe der vorliegenden Erfindung, Autopilotsysteme von Wasserfahrzeugen und/oder Dynamische Positioniersysteme derart zu verbessern, dass die Schalthysterese reduziert wird. Die Lösung dieser Aufgabe gelingt mit einer Anordnung zur Ermittlung von auf ein Ruder, insbesondere Vollschweberuder, für Wasserfahrzeuge, insbesondere Schiffe, wirkenden Kräften, nämlich Auftriebskraft und Widerstandskraft, umfassend eine Recheneinheit, mindestens eine am Ruder angeordnete Messeinrichtung zur Ermittlung von Werten einer physikalischen Größe eines Ruders, nämlich eine Biegespannung und/oder ein Drehmoment, und Mittel zur Übermittlung der ermittelten Werte der physikalischen Größe an die Recheneinheit, wobei die Recheneinheit zur Bestimmung der auf das Ruder wirkenden Kräfte auf Basis der ermittelten Werte der physikalischen Größe ausgebildet ist.

Durch die Messung der Werte einer mit den auf das Ruder wirkenden Kräften in Zusammenhang stehenden physikalischen Größe können die auf das Ruder wirkenden Kräfte jederzeit bestimmt werden. Die Messung der Werte der physikalischen Größe am Ruder wird zweckmäßigerweise mehrfach bzw. in vorgegebenen, sich gegebenenfalls wiederholenden Abständen, durchgeführt. Insbesondere ist es zweckmäßig, die Messungen während des Betriebs, d. h. während der Fahrt des Wasserfahrzeuges bzw. während des Haltens des Wasserfahrzeuges auf einer vorgegebenen Position, fortwährend durchzuführen. Durch die vorliegende Anordnung können nun konkrete Größen des Ruders, nämlich die auf das Ruder wirkenden Kräfte, bestimmt werden und an ein Dynamisches Positioniersystem bzw. ein Autopilotsystem weitergeleitet werden, die diese Rudergrößen zusammen mit den anderen Parametern auf Basis eines vorgegebenen Algorithmus auswerten und hierdurch in der Lage sind, die optimale Größe der Ruderwinkelveränderung bzw. die optimale Höhe der Leistungserhöhung bzw. Erniedrigung besser zu bestimmen, so dass Schalthysterese vermieden bzw. zumindest verringert wird.

Der Begriff "physikalische Größe" kann grundsätzlich jede quantitativ bestimmbare Eigenschaft des Ruders bzw. der Ruderanlage sein. Erfindungsgemäß handelt es sich um eine Biegespannung und/oder ein Drehmoment. Sie ist entweder direkt mittels der mindestens einen Messeinrichtung messbar (Messgröße) oder kann aus der von der Messeinrichtung gemessenen Messgröße abgeleitet bzw. berechnet werden. Die Berechnung erfolgt zweckmäßigerweise ebenfalls mittels der Recheneinheit. Allerdings kann die Messeinrichtung auch selbst zur Ermittlung bzw. Berechnung der physikalischen Größe aufgrund der Messgrößen ausgebildet sein. Die Recheneinheit kann beispielsweise ein geeigneter Computer o. dgl. sein und kann gegebenenfalls auch Bestandteil eines Dynamischen Positioniersystems sein. Manchmal werden derartige Größen auch als "physikalischtechnische Größen" oder "technische Größen" bezeichnet. Solche Begriffe sind ebenfalls von der vorliegenden Erfindung umfasst.

Die Mittel zur Übermittlung der ermittelten bzw. gemessenen Größe von der Messeinrichtung zur Recheneinheit können jede geeigneten Mittel umfassen. Insbesondere können dies Mittel zu einer kabelgebundenen oder zu einer drahtlosen Datenübertragung sein. Die Messeinrichtung wird direkt am Ruder vorgesehen sein, wobei sich die Recheneinheit normalerweise außerhalb der Ruderanlage an Bord des Wasserfahrzeuges befindet. Insofern kann hier beispielsweise ein Kabel vom Ruder zur Recheneinheit geführt werden und der Messeinrichtung ein entsprechender Sender und der Recheneinheit ein korrespondierender Empfänger zur Verfügung gestellt werden. Ebenso sind bei einer drahtlosen Übertragung zweckmäßigerweise geeignete Sender und Empfänger vorgesehen.

Die Recheneinheit umfasst wiederum geeignete Algorithmen, mit denen auf Basis eines oder mehrerer der ermittelten Werte der physikalischen Größe die auf das Ruder wirkenden Kräfte bestimmt bzw. berechnet werden können. Gemäß der Erfindung werden die Auftriebskraft des Ruders und die Widerstandskraft des Ruders bestimmt. Im vorliegenden Zusammenhang handelt es sich bei der Auftriebskraft insbesondere um die Kraft des dynamischen Auftriebs des Ruders. Im Allgemeinen entsteht eine derartige Kraft, wenn sich ein Körper (Ruder) mit einer bestimmten Form oder Stellung relativ zu einem Fluid (Wasser) bewegt. Die Kraft, die das Fluid bzw. die Flüssigkeit auf den Körper ausübt, wird üblicherweise in zwei Komponenten zerlegt: In den dynamischen Auftrieb, der quer zur Strömungsrichtung bzw. zur Wasserfahrzeuglängsachse wirkt und den Reibungswiderstand (Widerstandskraft), der längs der Strömungsrichtung bzw. Wasserfahrzeuglängsachse wirkt. In marinetechnischen Fachkreisen werden die Begriffe "Auftriebskraft" und "Widerstandskraft" des Ruders häufig auch mit ihren englischen Begriffen "lift" und "drag" bezeichnet. Insbesondere die Größe der Auftriebskraft ist für die Ruderwirkung entscheidend. Die Auftriebskraft wird manchmal auch als "Seitenkraft" des Ruders bezeichnet.

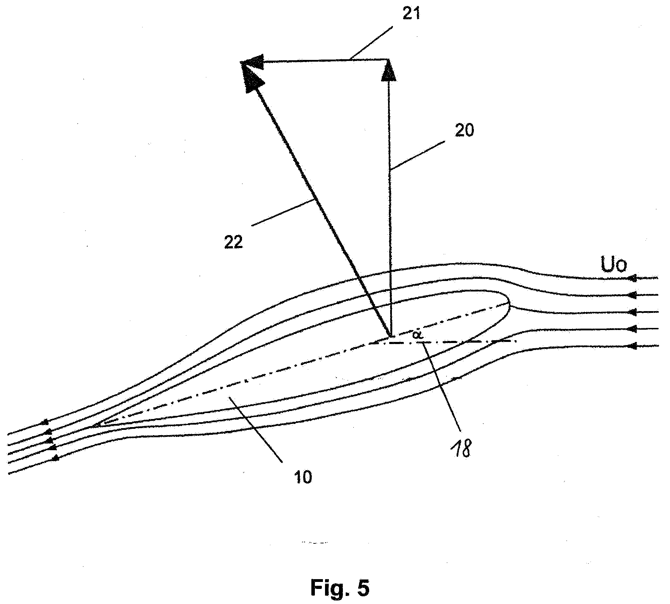

Ist jeweils der aktuelle Betrag des Auftriebs- bzw. des Widerstands des Ruders bekannt, kann basierend hierauf von einem Autopilotsystem bzw. einem Dynamischen Positioniersystem die Ruderanlage bzw. die Antriebsanlage des Wasserfahrzeuges viel genauer angesteuert werden, um den gewünschten Kurs bzw. die gewünschte Position zu erreichen. Der Zusammenhang zwischen Auftrieb und Widerstand ist schematisch in Fig. 5 dargestellt, wobei U₀ die Propellerströmung eines Antriebspropellers eines Wasserfahrzeuges (hier nicht dargestellt) bezeichnet und mit 10 ein innerhalb dieser Strömung liegendes Ruder bezeichnet ist. Das Ruder ist unter einem Winkel α gegenüber der Wasserfahrzeuglängsrichtung 18 bzw. der Richtung der Strömung U₀ verdreht. Normalerweise sind die Wasserfahrzeuglängsrichtung 18 und die Strömungsrichtung identisch. Die hieraus resultierende, und senkrecht zur Strömungsrichtung bzw. Wasserfahrzeuglängsrichtung 18 verlaufende Auftriebskraft ist mit dem Pfeil 20 dargestellt, wohingegen die Widerstandskraft mit dem Pfeil 21 dargestellt ist und in Wasserfahrzeuglängsrichtung 18 verläuft. Die Pfeile 20, 21 sind als Vektoren dargestellt und zeigen sowohl Betrag als auch Richtung der jeweiligen Kraft an. Eine aus beiden vorgenannten Kräften resultierende Kraft ist mit dem Pfeil 22 dargestellt. Der in Fig. 5 dargestellte Zusammenhang ist insbesondere für Autopilotsysteme für Wasserfahrzeuge entscheidend, da diese im Wesentlichen nur das Ruder verstellen und normalerweise nicht auf die Antriebseinheit einwirken und somit hierfür die Höhe der Auftriebskraft des Ruders hauptsächlich entscheidend für die Berechnung des Ruderwinkels und die entsprechende Ansteuerung ist. Gemäß der vorliegenden Erfindung kann entsprechend bei Autopilotsystemen mit wesentlich weniger und geringeren Ruderausschlägen ausgekommen werden, wodurch die notwendige Vortriebsenergie des Wasserfahrzeuges erheblich eingespart werden kann.

Erfindungsgemäß ist die physikalische Größe eine Biegespannung und/oder ein Drehmoment. Alternativ zur Biegespannung kann auch das Biegemoment, das auf das Ruder wirkt und die Biegespannung im Ruder verursacht, ermittelt werden. Auf Basis der Biegespannung kann sowohl die Auftriebskraft als auch die Widerstandskraft ohne weiteres rechnerisch ermittelt werden. Ebenso ist dies auf Basis der auf das Ruder wirkenden Torsionskraft, d. h. des Drehmomentes, möglich. Besonders bevorzugt ist es, sowohl die Biegespannung als auch das Drehmoment zu bestimmen, um eine möglichst hohe Genauigkeit bei der Berechnung der auf das Ruder wirkenden Kräfte zu erhalten. Die Biegespannung kann aufgrund der Art ihrer Einspannung besonders vorteilhaft bei Vollschweberudern ermittelt werden. Insbesondere ist es zweckmäßig, dass die mindestens eine Messeinrichtung zur Ermittlung der auf einen Ruderkoker und/oder einen Ruderschaft des Ruders wirkenden Biegespannung und/oder zur Ermittlung des auf den Ruderschaft des Ruders wirkenden Drehmomentes ausgebildet ist. Ein Ruderkoker kommt insbesondere bei Vollschweberudern zum Einsatz und besteht aus einem vom Wasserfahrzeugkörper in das Ruder hineingeführten Hohlträger, innerhalb dessen der Ruderschaft angeordnet und gelagert ist. Hierfür ist es ferner bevorzugt, dass die mindestens eine Messeinrichtung am Ruderkoker, insbesondere am Innenmantel des Ruderkokers, und/oder am Ruderschaft, insbesondere am Außenmantel des Ruderschaftes, angeordnet ist. Der Ruderkoker eines Vollschweberuders ist derart ausgelegt, dass er die auf das Ruder wirkende Biegespannung aufnimmt und in den Wasserfahrzeugkörper abführt. Insofern ist die Messung der Biegespannung dort besonders zweckmäßig. Die Messung des Drehmomentes am Ruderschaft ist ebenfalls zweckmäßig, da dieser die Drehachse des Ruders bildet.

Insbesondere ist es bevorzugt, dass die mindestens eine Messeinrichtung in einem oberen, dem Schiffskörper zugewandten Bereich des Ruderschaftes und/oder des Ruderkokers angeordnet ist. Bevorzugt ist die Messeinrichtung dabei in der oberen Hälfte, besonders bevorzugt im oberen Drittel des Ruderschaftes bzw. des Ruderkokers angeordnet. Dies ist insbesondere deshalb vorteilhaft, da in diesen Bereichen die Durchbiegung häufig am Größten ist und die vorgenannten Bereiche ferner am ehesten zugänglich für die Anbringung einer Messeinrichtung sind. Insbesondere befinden sich diese Bereiche häufig noch innerhalb des Schiffskörpers, so dass gegebenenfalls auch Kabel o. dgl. auf relativ einfache Art und Weise installiert werden können.

Um eine besonders hohe Redundanz der Messung zu erhalten bzw. um zwei physikalische Größen, insbesondere sowohl die Biegespannung als auch das Drehmoment, zu ermitteln, ist es zweckmäßig, zwei Messvorrichtungen vorzusehen, die bevorzugt jeweils am Ruderkoker und/oder am Ruderschaft vorgesehen sind. Ferner sind die beiden Messeinrichtungen bei dieser Ausführungsform bezogen auf den Umfang des zylindrischen Ruderkokers bzw. des Ruderschaftes um 80° bis 100°, insbesondere im Wesentlichen um 90°, versetzt zueinander angeordnet. Diese versetzte Anordnung der beiden Messeinrichtungen zueinander ist insbesondere in einer Querschnittsansicht erkennbar. Vorteilhaft ist hierbei, dass die Auftriebskraft und die Widerstandskraft des Ruders ebenfalls im Wesentlichen orthogonal zueinander wirken, so dass jeweils eine Messeinrichtung zur Ermittlung einer physikalischen Größe, die die Grundlage zur Bestimmung jeweils einer der vorgenannten Kräfte bildet, vorgesehen sein kann. Grundsätzlich kann jedoch auch eine Messung nur am Ruderschaft oder nur am Ruderkoker erfolgen.

Grundsätzlich kann die Messeinrichtung jede geeigneten, aus dem Stand der Technik bekannten Messmittel umfassen. Besonders bevorzugt umfasst die mindestens eine Messeinrichtung einen Dehnungsmessstreifen, optische Messmittel, und/oder Mittel zur Messung von Schwingungsfrequenzen. Hierdurch können auf einfache und kostengünstige Weise verlässliche Messergebnisse erhalten werden, auf deren Basis der Wert der physikalischen Größe ermittelt werden kann.

Des Weiteren wird die der Erfindung zugrundeliegende Aufgabe durch ein Verfahren zur Ermittlung von auf ein Ruder, insbesondere Vollschweberuder, für Wasserfahrzeuge, insbesondere Schiffe, wirkenden Kräften gelöst, bei dem mindestens ein Wert einer physikalische Größe eines Ruders, nämlich ein Drehmoment und/oder eine Biegespannung, mittels mindestens einer Messeinrichtung ermittelt wird, bei dem der mindestens eine ermittelte Wert an eine Recheneinheit übermittelt wird, und bei dem mittels der Recheneinheit auf Basis des ermittelten mindestens einen Wertes auf das Ruder wirkende Kräfte, nämlich eine Auftriebskraft und eine Widerstandskraft, bestimmt werden. Die Messung wird am Ruder, insbesondere für das Drehmoment am Ruderschaft des Ruders und für die Biegespannung am Ruderschaft und/oder am Ruderkoker des Ruders, vorgenommen. Insbesondere kann das Verfahren mit der erfindungsgemäßen, vorstehend beschriebenen Anordnung durchgeführt werden.

Ferner ist es zweckmäßig, dass zwei Messeinrichtungen jeweils am Ruder, insbesondere am Ruderkoker und/oder jeweils am Ruderschaft, vorgesehen sind, und dass auf Basis der Messwerte der einen Messeinrichtung die Auftriebskraft des Ruders und auf Basis der Messwerte der anderen Messeinrichtung die Widerstandskraft des Ruders ermittelt wird.

Darüber hinaus wird die der Erfindung zugrundeliegende Aufgabe durch ein Dynamisches Positioniersystem zur automatischen Positionierung eines Wasserfahrzeuges, insbesondere Schiff, mit einem Ruder, insbesondere Vollschweberuder, einem Verstellmittel, insbesondere einer Rudermaschine, zur Verstellung des Ruders und einem Antriebspropeller gelöst, welches eine Steuereinrichtung zur Ansteuerung des Verstellmittels und/oder des Antriebspropellers, Mittel zur Ermittlung von Wasserfahrzeugpositionsdaten, und mindestens eine Messeinrichtung zur Ermittlung von Messdaten von auf das Wasserfahrzeug wirkenden physikalischen Größen bzw. von physikalischen Größen des Wasserfahrzeuges umfasst. Die Steuereinrichtung ist ferner zur Ansteuerung des Verstellmittels und/oder des Antriebspropellers auf Basis der Wasserfahrzeugpositionsdaten und der Messdaten ausgebildet. Ferner ist erfindungsgemäß die mindestens eine Messeinrichtung am Ruder angeordnet und zur Ermittlung von Rudermessdaten einer physikalischen Größe des Ruders ausgebildet. Die Steuereinrichtung ist ihrerseits zur Berücksichtigung der Rudermessdaten im Hinblick auf die Ansteuerung des Verstellmittels und/oder des Antriebspropellers ausgebildet und zur Ermittlung von auf das Ruder wirkenden Kräften, nämlich der Auftriebskraft und der Widerstandskraft, auf Basis der Rudermessdaten der physikalischen Größe des Ruders ausgebildet.

Darüber hinaus wird die der Erfindung zugrundeliegende Aufgabe durch ein Autopilotsystem zur automatischen Kurssteuerung eines Wasserfahrzeuges, insbesondere Schiff, mit einem Ruder, insbesondere Vollschweberuder, und einem Verstellmittel, insbesondere eine Rudermaschine zur Verstellung des Ruders, umfassend eine Steuereinrichtung zur Ansteuerung des Verstellmittels, Mittel zur Ermittlung von Wasserfahrzeugpositionsdaten, die zur Übermittlung der Wasserfahrzeugpositionsdaten an die Steuereinrichtung ausgebildet sind, und mindestens eine Messeinrichtung zur Ermittlung von Messdaten von auf das Wasserfahrzeug wirkenden physikalischen Größen, wobei die mindestens eine Messeinrichtung zur Ermittlung der ermittelten Messdaten an die Steuereinrichtung ausgebildet ist, wobei die Steuereinrichtung zur Ansteuerung des Verstellmittels auf Basis der Wasserfahrzeugpositionsdaten und der Messdaten ausgebildet ist, gelöst. Ferner ist erfindungsgemäß die mindestens eine Messeinrichtung am Ruder angeordnet und zur Ermittlung von Rudermessdaten einer physikalischen Größe des Ruders ausgebildet. Die Steuereinrichtung ist zur Ermittlung von auf das Ruder wirkenden Kräften, nämlich der Auftriebskraft und der Widerstandskraft, auf Basis der Rudermessdaten der physikalischen Größe des Ruders und zur Berücksichtigung der Rudermessdaten im Hinblick auf die Ansteuerung des Verstellmittels ausgebildet.

Bei beiden Systemen übermitteln Mittel zur Ermittlung von Wasserfahrzeugpositionsdaten diese an die Steuereinrichtung. Ebenso werden die Messdaten der mindestens einen Messeinrichtung an die Steuereinrichtung übermittelt. Die Messdaten können gemessene Werte der physikalischen Größe des Ruders oder auch aufgrund der eigentlich gemessenen Werte der Messeinrichtung ermittelte bzw. berechnete Werte sein. Erfindungsgemäß werden nun erstmals statt der üblichen, aus dem Stand der Technik bekannten Messdaten, Rudermessdaten einer auf das Ruder wirkenden physikalischen Größe verwendet. Diese Rudermessdaten werden ebenfalls an die Steuereinrichtung übermittelt und zur Bestimmung der automatischen Positionierung bzw. automatischen Kurssteuerung des Wasserfahrzeuges mit herangezogen, d.h., insbesondere auf Basis der Rudermessdaten wird von der Steuereinrichtung des Dynamischen Positionier- bzw. Autopilotsystems die Ansteuerung des Verstellmittels und/oder des Antriebspropellers vorgenommen. Somit kann durch die erfindungsgemäßen Systeme ein wesentlich genaueres Ansteuern der Manövrieranlage des Wasserfahrzeuges erfolgen und somit die Schalthysterese deutlich reduziert werden. Bei den erfindungsgemäßen Systemen werden somit erstmals Messdaten, die ausschließlich das Ruder betreffen, zur Positionierung bzw. Steuerung des Wasserfahrzeuges herangezogen.

Die Steuereinrichtung oder gegebenenfalls auch eine separate Recheneinheit ist zur Ermittlung von auf das Ruder wirkenden Kräften, insbesondere der Auftriebskraft und der Widerstandskraft, auf Basis der der ermittelten Werte der physikalischen Größe des Ruders ausgebildet. Die auf das Ruder wirkenden Kräfte werden dann für die Positionierung bzw. Kurssteuerung und insbesondere für die Ansteuerung der Manövrieranlage des Wasserfahrzeuges herangezogen.

Die physikalische Größe des Ruders ist vorzugsweise eine Biegespannung und/oder ein Drehmoment.

Die mindestens eine Messeinrichtung der beiden Systeme kann gemäß einer der vorstehend beschriebenen Ausführungsformen der erfindungsgemäßen Anordnung zur Ermittlung von auf ein Ruder wirkenden Kräften ausgebildet sein. Insbesondere kann die gesamte, vorgenannte erfindungsgemäße Anordnung Teil des Dynamischen Positionier- bzw. Autopilotsystems sein, wobei die Funktion der Recheneinheit aus der erfindungsgemäßen Anordnung von der Steuereinrichtung des jeweiligen Systems übernommen werden kann. Alternativ kann die Recheneinheit auch separat innerhalb einer der beiden Systeme vorgesehen werden.

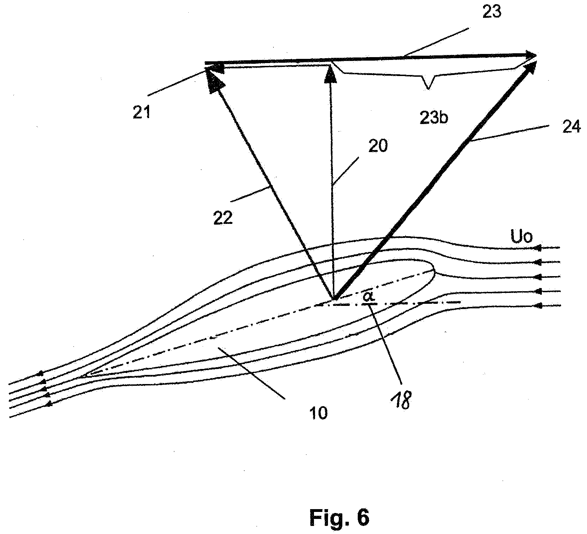

In einer bevorzugten Ausführungsform der Systeme ist eine weitere Messeinrichtung vorgesehen, die zur Ermittlung von Wasserfahrzeugantriebsmessdaten in Bezug auf die Antriebskraft des Wasserfahrzeuges, insbesondere den Schub des Wasserfahrzeuges, ausgebildet ist. Diese ist bevorzugt an der Antriebswelle des Antriebspropellers des Wasserfahrzeuges vorgesehen. Ferner ist die Steuereinrichtung zur Berücksichtigung der Wasserfahrzeugantriebsmessdaten im Hinblick auf die Ansteuerung des Verstellmittels und/oder des Antriebspropellers ausgebildet. Somit werden bei dieser Ausführungsform zusätzlich zu den Rudermessdaten die Wasserfahrzeugantriebsmessdaten bei der Ansteuerung der Manövrieranlage des Wasserfahrzeuges herangezogen, bzw. in den der Ansteuerung zugrundeliegenden Algorithmus mit eingebracht. Dies ist insbesondere deswegen zweckmäßig, weil der Schub des Wasserfahrzeuges genau entgegen der Widerstandskraft des Ruders wirkt bzw. um die Widerstandskraft des Ruders vermindert wird. Insofern ist es bei der zusätzlichen Vorsehung der Wasserfahrzeugantriebsmessdaten möglich, weitergehende Informationen über die Manövrieranlage des Wasserfahrzeuges zu erhalten. Insbesondere kann die Steuereinrichtung auf Basis dieser Daten die Nettomanövrierkraft ("net maneuvering force") ermitteln bzw. berechnen und diese für den Prozess der Ansteuerung der Manövrieranlage mit heranziehen. Der Zusammenhang zwischen diesen einzelnen Kräften wird durch die Darstellung in Fig. 6 verdeutlicht. Diese Darstellung basiert auf der Darstellung von Fig. 5, wobei zusätzlich der dem Widerstand 21 entgegenwirkende Schub 23 als Vektorpfeil eingezeichnet ist. Aus dem Nettoschub 23b (= Schub - Widerstand) und dem Auftrieb 20 kann als resultierende Kraft die Nettomanövrierkraft 24 ermittelt werden. Der in Fig. 5 dargestellte Zusammenhang ist insbesondere bei Dynamischen Positioniersystemen relevant, da diese häufig sowohl zur Ansteuerung des Ruders als auch der Antriebseinheit ausgebildet sind.

Ferner wird die der Erfindung zugrundeliegende Aufgabe durch ein Verfahren zur dynamischen Positionierung und/oder zur automatischen Kurssteuerung eines Wasserfahrzeuges, insbesondere eines Schiffes gelöst, das folgende Schritte umfasst:
a.) Ermitteln eines Wertes mindestens einer physikalischen Größe eines Ruders, insbesondere Vollschweberuders, eines Wasserfahrzeuges, nämlich ein Drehmoment oder eine Biegespannung,
b.) Bestimmen von auf das Ruder wirkenden Kräften, nämlich der Auftriebskraft und der Widerstandskraft, auf Basis des ermittelten Wertes der physikalischen Größe des Ruders,
c.) Ansteuern eines Verstellmittels zur Verstellung des Ruders, insbesondere einer Rudermaschine, und/oder eines Antriebspropeller des Wasserfahrzeuges auf Basis der in Schritt b.) bestimmten Kraft und gegebenenfalls weiterer Wasserfahrzeugpositionsdaten und/oder Wasserfahrzeugsmessdaten, und gegebenenfalls
d.) Wiederholen der Schritte a.) bis c.).

Die Wasserfahrzeugmessdaten sind hierbei Messdaten bezüglich anderweitiger auf das Wasserfahrzeug wirkender physikalischen Größen, beispielsweise Windstärke, Wellengang, etc. Zweckmäßigerweise werden die einzelnen Verfahrensschritte während der Fahrt des Wasserfahrzeuges ständig wiederholt. Somit werden auch die auf das Ruder wirkende Kräfte kontinuierlich und in sich wiederholender Art und Weise ermittelt, was zu qualitativ hochwertigen Ergebnissen in Bezug auf eine optimale Positionierung bzw. Kursausrichtung des Wasserfahrzeuges führt. Insbesondere kann das Verfahren mit einem erfindungsgemäßen, vorstehend beschriebenen Dynamischen Positionier- bzw. Autopilotsystem durchgeführt werden.

In einer bevorzugten Ausführungsform des erfindungsgemäßen Verfahrens kann ferner die Antriebskraft des Wasserfahrzeuges, insbesondere der Schub, ermittelt werden. In diesem Zusammenhang ist es dann zweckmäßig, die Auftriebskraft und die Widerstandskraft zu ermitteln und auf Basis der vorgenannten drei Kräfte eine Wasserfahrzeugmanövrierkraft bzw. eine Nettomanövrierkraft des Wasserfahrzeuges zu bestimmen, wobei das Ansteuern in Schritt c.) auf Basis der Wasserfahrzeugmanövrierkraft erfolgt. Hierdurch kann die Schalthysterese weiter reduziert werden.

Ferner wird die der Erfindung zugrundeliegende Aufgabe durch ein Ruder, insbesondere Vollschweberuder, für Wasserfahrzeuge, insbesondere Schiffe, gelöst, das einen Ruderkoker und einen Ruderschaft umfasst, wobei am Ruder, insbesondere am Ruderkoker und/oder am Ruderschaft, mindestens eine Messeinrichtung vorgesehen ist, die zur Ermittlung einer physikalischen Größe des Ruders, nämlich einer Biegespannung im Ruderkoker und/oder im Ruderschaft und/oder eines Drehmomentes im Ruderschaft, ausgebildet ist. Des Weiteren umfasst das Ruder Mittel zur Übermittlung der ermittelten Werte der mindestens einen Messeinrichtung an eine Datenverarbeitungseinheit. Die Datenverarbeitungseinheit kann insbesondere ein Computer sein und sie kann zu einem Dynamischen Positionier- bzw. Au-Schließlich kann die der Erfindung zugrundeliegende Aufgabe durch ein Computerprogrammprodukt, das ein computerlesbares Speichermedium umfasst bzw. ein solches computerlesbares Speichermedium selbst gelöst werden, wobei auf dem Speichermedium ein Programm gespeichert ist, dass es einem Computer ermöglicht, nachdem es in den Speicher des Computers geladen worden ist, eines der vorstehenden beschriebenen erfindungsgemäßen Verfahren, gegebenenfalls im Zusammenspiel mit einer erfindungsgemäßen Anordnung, einem erfindungsgemäßen Dynamischen Positioniersystem oder einem erfindungsgemäßen Autopilotsystem, durchzuführen.

Nachfolgend wird die Erfindung anhand verschiedener in der Zeichnung dargestellter Ausführungsbeispiele näher erläutert. Es zeigen schematisch:
- Fig. 1: eine teilweise geschnittene Seitenansicht eines Ruders mit Messeinrichtungen zur Ermittlung eines Drehmomentes und einer Biegespannung,
- Fig. 2: eine Schnittansicht eines Teilbereiches eines Ruderkokers und eines Ruderschaftes eines Ruders mit Messeinrichtungen für Drehmoment und Biegespannung,
- Fig. 3: eine schematische Darstellung eines Dynamischen Positioniersystems (als Referenzbeispiel),
- Fig. 4: eine schematische Darstellung eines Autopilotsystems (als Referenzbeispiel),
- Fig. 5: Kraftvektordarstellung zur Verdeutlichung des Zusammenhanges zwischen Auftrieb und Widerstand, und
- Fig. 6: Kraftvektordarstellung aus Fig. 5 mit zusätzlich eingezeichneter Schub- und Nettomanövrierkraft.

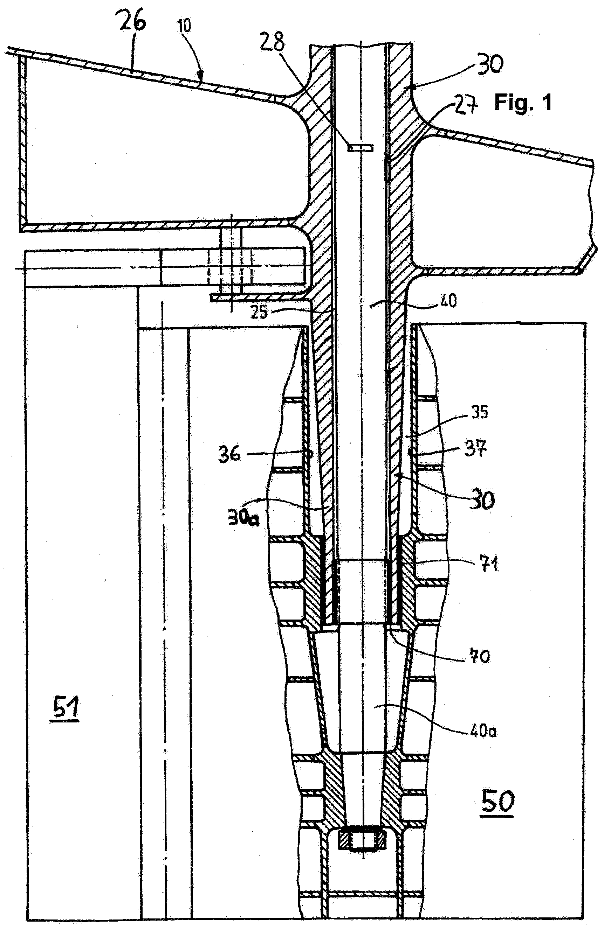

Fig. 1 zeigt die Seitenansicht eines Ruders 10, das einen Ruderkoker 30, einen Ruderschaft 40 und ein Ruderblatt 50 mit anlenkbarer Flosse 51 umfasst. Der Koker 30, der Schaft 40 sowie einige Teilbereiche des Ruderblattes 50 sind in einer Schnittdarstellung dargestellt. Der Ruderkoker 30 ist in seinem oberen Bereich fest mit dem Schiffskörper 26 verbunden. Der Ruderkoker 30 weist ferner eine Innenbohrung 25 auf, die den Ruderschaft 40 aufnimmt. Der Ruderkoker 30 ist vorzugsweise in eine zylindrische Einziehung 35 im Ruderblatt 50 eingeführt, die das freie Ende 30a des Ruderkokers 30 aufnimmt. Die Einziehung 35 wird durch eine seitliche Beplankung 36, 37 des Ruderblattes 50 begrenzt. Der Ruderschaft 40 ist mit seinem vom Ruderkoker 30 vorstehenden und in das Ruderblatt 50 hineinragenden Endbereich 40a mit dem Ruderblatt 50 verbunden. Ferner sind Lager 70, 71 zur Lagerung des Schaftes 40 im Ruderkoker 30 bzw. zur Lagerung des Ruderkokers 30 im Ruderblatt 50 vorgesehen. Auf der Oberfläche des Ruderschaftes 40 ist in einem oberen Bereich des Ruderschaftes 40, der innerhalb des Schiffskörpers 26 und noch nicht im Ruderblatt 50 angeordnet ist, eine Messeinrichtung 28 vorgesehen. Die Messeinrichtung 28 ist fest auf der Oberfläche des Schaftes 40 montiert. Diese Messeinrichtung 28 umfasst Dehnungsmessstreifen. Eine weitere Messeinrichtung 27 ist am Innenmantel bzw. auf der Innenseite des Ruderkokers 30 im oberen Bereich des Ruderkokers 30 und in der Nähe zur Messeinrichtung 28 angeordnet. Eine derartige Anordnung der Messeinrichtung 27, 28 hat den Vorteil, dass diese noch innerhalb des Schiffskörpers 26 angeordnet und somit relativ gut zugänglich sind und entsprechend hier auch Kabel o. dgl. relativ unkompliziert zu den Messeinrichtungen hingeführt werden können. Ferner sind die Messeinrichtungen 27, 28 im Bereich der größten Durchbiegung des Ruderschaftes 40 bzw. des Ruderkokers 30 angeordnet, so dass hier optimale Messergebnisse erzielt werden können. Grundsätzlich könnte die Messeinrichtung 27 auch auf dem Außenmantel des Ruderkokers 30 angeordnet sein. Die Messeinrichtung 27 umfasst ebenfalls einen Dehnungsmessstreifen. Die Messeinrichtung 28 ist zur Messung bzw. Ermittlung des Drehmomentes im Ruderschaft 40 ausgebildet, während mittels der Messeinrichtung 27 die im Ruderkoker 30 vorherrschende Biegespannung ermittelt werden kann. Die gemessenen bzw. ermittelten Werte werden von beiden Messeinrichtungen 27, 28 an eine Recheneinheit (hier nicht dargestellt) übertragen. Hierfür sind in jeder Messeinrichtung 27, 28 integriert Übermittlungs- bzw. Sendemittel (hier nicht dargestellt) vorgesehen, die für eine drahtlose Übertragung der Daten geeignet sind.

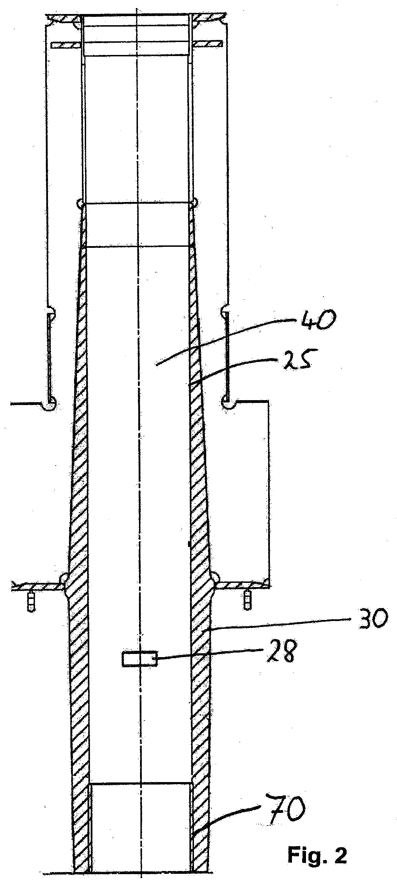

Fig. 2 zeigt einen Teilbereich eines Kokers 30 eines darin gelagerten Ruderschaftes 40 eines Ruders. Bei dieser Darstellung ist ebenfalls auf der Oberfläche des Ruderschaftes eine Messeinrichtung 28 zur Ermittlung des Drehmomentes und/oder der Biegespannung des Ruderschaftes 40 vorgesehen. Eine weitere Messeinrichtung ist nicht vorgesehen. Somit erfolgt die Ermittlung der auf das Ruder wirkenden Kräfte bei der Ausführung gemäß Fig. 2 einzig durch eine am Ruderschaft 40 vorgesehene Messeinrichtung, die normalerweise entweder zur Ermittlung des Drehmomentes oder der Biegespannung ausgebildet ist. Die Messeinrichtung 28 verfügt ebenfalls über Sende- bzw. Übermittlungsmittel zur Übermittlung der Daten an eine Recheneinheit (hier nicht dargestellt).

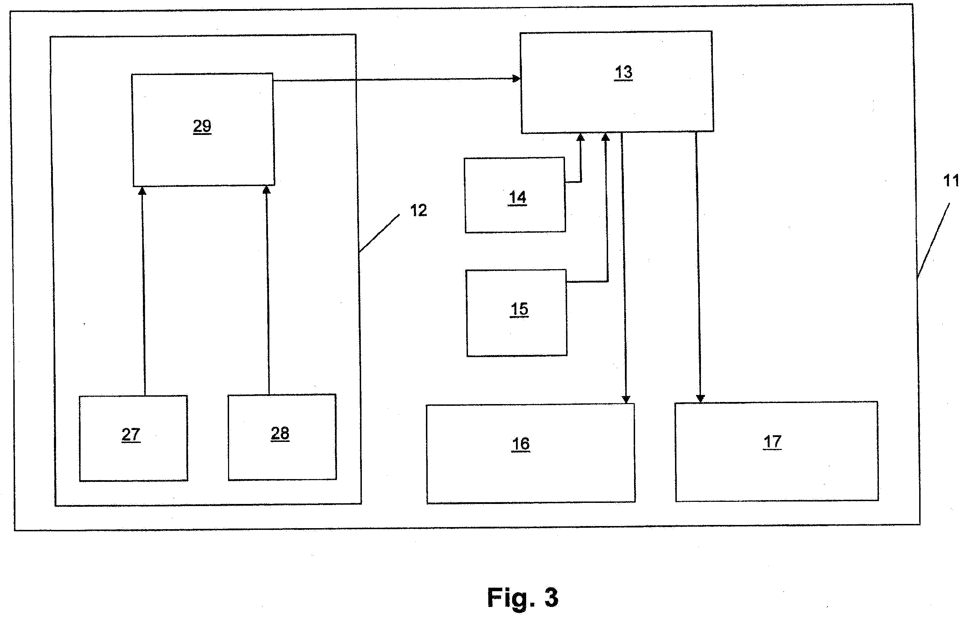

Fig. 3 zeigt eine schematische Darstellung eines Dynamischen Positioniersystems 11. Dieses System 11 umfasst eine Anordnung 12 zur Ermittlung von auf ein Ruder wirkenden Kräften. Die Messeinrichtungen 27, 28 ermitteln eine Biegespannung bzw. einen Drehmoment am Ruder. Die gemessenen bzw. ermittelten Daten werden von den Messeinrichtungen 27, 28 an eine Recheneinheit 29 übermittelt, die sich an Bord eines Schiffes (hier nicht dargestellt) befindet. Die Recheneinheit 29 errechnet auf Basis der ermittelten Werte für die Biegespannung und das Drehmoment eine Auftriebskraft 20 und eine Widerstandskraft 21 des Ruders 10 und übermittelt die Werte für diese Kräfte an eine Steuereinrichtung 13 des Dynamischen Positioniersystems 11. Grundsätzlich kann die Recheneinheit 29 auch in einen vorgelagerten Schritt auf Basis der Messwerte zunächst das Drehmoment bzw. die Biegespannung ermitteln. Weiterhin erhält die Steuereinrichtung 13 Wasserfahrzeugpositionsdaten von einem als GPS-Empfänger ausgebildeten Mittel zur Ermittlung von Wasserfahrzeugpositionsdaten 14 sowie Daten von einer Windmesseinrichtung 15 über die Windstärke in der Umgebung des Wasserfahrzeuges. Gegebenenfalls können hier noch weitere Messeinrichtungen bzw. Mittel zur Ermittlung von Wasserfahrzeugpositionsdaten mit der Steuereinrichtung 13 verbunden werden. Basierend auf den an die Steuereinrichtung 13 übermittelten Werten bzw. Parametern ermittelt bzw. errechnet die Steuereinrichtung 13 auf Basis von in der Steuereinrichtung 13 gespeicherten bzw. vorgegebenen Algorithmen, welche Ruderwinkel bzw. welche Antriebskraft optimal zur Erreichung bzw. Beibehaltung der gewünschten Positionen, die ebenfalls in der Steuereinrichtung 13 gespeichert sind, ist. Bei diesem Berechnungsschritt wird erfindungsgemäß auch die Auftriebskraft 20 und/oder die Widerstandskraft 21 berücksichtigt. Basierend auf den ermittelten Ruderwinkeln bzw. der ermittelten Leistungshöhe steuert die Steuereinrichtung 13 eine Verstelleinrichtung 16 zur Verstellung des Ruderwinkels und/oder eine Wasserfahrzeugantriebseinheit 17 zur Erhöhung bzw. Erniedrigung des Schubs des Wasserfahrzeuges an. Der vorstehend beschriebene Vorgang wird während des Betriebes des Wasserfahrzeuges ständig wiederholt, um sicherzustellen, dass das Wasserfahrzeug fortwährend auf der gewünschten Position verbleibt.

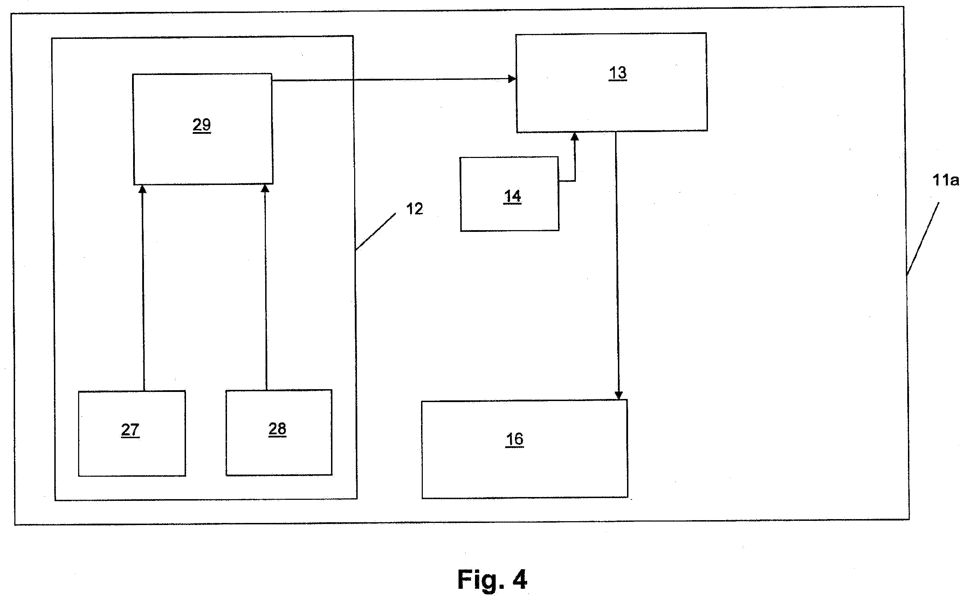

Fig. 4 zeigt eine schematische Darstellung eines Autopilotsystems 11a. Diese Darstellung bzw. das Autopilotsystem 11a entspricht im Wesentlichen dem in Fig. 3 dargestellten Dynamischen Positioniersystem 11. Im Unterschied zum Dynamischen Positioniersystem 11 steuert die Steuereinrichtung 13 des Autopilotsystems 11a nur die Verstellmittel 16 zur Verstellung des Ruderwinkels an und nicht auch noch eine Wasserantriebseinheit. Darüber hinaus ist auch keine Windmesseinrichtung o. dgl. vorgesehen, da derartige Parameter bei Fahrt des Wasserfahrzeugs für die Kurssteuerung nur eine untergeordnete Rolle spielen.

### Bezugszeichenliste

- 10: Ruder
- 11: Dynamisches Positioniersystem
- 11a: Autopilotsystem
- 12: Anordnung
- 13: Steuereinrichtung
- 14: Mittel zur Ermittlung von Wasserfahrzeugpositionsdaten
- 15: Windmesseinrichtung
- 16: Ruderverstelleinrichtung
- 17: Wasserfahrzeugantriebseinheit
- 18: Wasserfahrzeuglängsrichtung

- 20: Auftriebskraft
- 21: Widerstandskraft
- 22: Resultierende Kraft
- 23: Schub
- 23b: Nettoschub
- 24: Nettomanövrierkraft
- 25: Innenbohrung
- 26: Schiffskörper
- 27: Messeinrichtung / Koker
- 28: Messeinrichtung / Schaft
- 29: Recheneinheit

- 30: Ruderkoker
- 30a: unteres Ruderkokerende
- 35: Einziehung
- 36: Beplankung
- 37: Beplankung

- 40: Ruderschaft

- 50: Ruderblatt
- 51: Flosse

- 70: Lager
- 71: Lager

- U₀: Propellerströmung
- α: Ruderwinkel

## Patentansprüche

1. Anordnung (12) zur Ermittlung von auf ein Ruder (10), insbesondere Vollschweberuder, für Wasserfahrzeuge, insbesondere Schiffe, wirkenden Kräften, umfassend eine Recheneinheit (29), mindestens eine Messeinrichtung (27, 28) zur Ermittlung von Werten einer physikalischen Größe eines Ruders und Mittel zur Übermittlung der ermittelten Werte der physikalischen Größe an die Recheneinheit (29), wobei die Recheneinheit (29) zur Bestimmung der auf das Ruder (10) wirkenden Kräfte auf Basis der ermittelten Werte der physikalischen Größe ausgebildet ist, **dadurch gekennzeichnet, dass** die mindestens eine Messeinrichtung (27, 28) am Ruder (10) angeordnet ist, wobei die auf das Ruder wirkenden Kräfte Auftriebskraft (20) und Widerstandskraft (21) sind und wobei die physikalische Größe des Ruders eine Biegespannung und/oder ein Drehmoment ist.

2. Anordnung gemäß Anspruch 1,
**dadurch gekennzeichnet, dass** die mindestens eine Messeinrichtung (27, 28) zur Ermittlung der auf einen Ruderkoker (30) und/oder einen Ruderschaft (40) eines Ruders (10) wirkenden Biegespannung ausgebildet ist, und/oder dass die mindestens eine Messeinrichtung (27, 28) zur Ermittlung des auf einen Ruderschaft (40) eines Ruders (10) wirkenden Drehmoments ausgebildet ist.

3. Anordnung gemäß Anspruch 2,
**dadurch gekennzeichnet,**
**dass** die mindestens eine Messeinrichtung (27, 28) am Ruderkoker (30), insbesondere am Innenmantel des Ruderkokers (30), und/oder am Ruderschaft (40), insbesondere am Außenmantel des Ruderschaftes (40), angeordnet ist.

4. Anordnung gemäß Anspruch 3,
**dadurch gekennzeichnet,**
**dass** die mindestens eine Messeinrichtung (27; 28) in einem oberen Bereich des Ruderkokers (30) und/oder des Ruderschaftes (40), bevorzugt in der oberen Hälfte, besonders bevorzugt im oberen Drittel, angeordnet ist.

5. Anordnung gemäß Anspruch 3 oder 4,
**dadurch gekennzeichnet,**
**dass** zwei Messeinrichtungen (27, 28) am Ruderkoker (30) und/oder am Ruderschaft (40) vorgesehen sind, wobei die Messeinrichtungen (27, 28) bezogen auf den Umfang des Ruderkokers (30) bzw. des Ruderschaftes (40) um 80° bis 100°, insbesondere im Wesentlichen um 90°, versetzt zueinander angeordnet sind.

6. Anordnung gemäß einem der vorhergehenden Ansprüche,
**dadurch gekennzeichnet,**
**dass** die mindestens eine Messeinrichtung (27, 28) einen Dehnungsmessstreifen, optische Messmittel, und/oder Mittel zur Messung von Schwingungsfrequenzen umfasst.

7. Verfahren zur Ermittlung von auf ein Ruder (10), insbesondere Vollschweberuder, für Wasserfahrzeuge, insbesondere Schiffe, wirkenden Kräften, bei dem mindestens ein Wert einer physikalische Größe eines Ruders (10) mittels mindestens einer Messeinrichtung (27, 28) ermittelt wird, bei dem der mindestens eine ermittelte Wert an eine Recheneinheit (29) übermittelt wird, und bei dem mittels der Recheneinheit (29) auf Basis des ermittelten mindestens einen Wertes auf das Ruder (10) wirkende Kräfte bestimmt werden, **dadurch gekennzeichnet, dass** die Messung mittels der mindestens einen Messeinrichtung (27, 28) am Ruder (10), insbesondere am Ruderkoker (30) und/oder am Ruderschaft (40) des Ruders (10), durchgeführt wird, wobei die auf das Ruder wirkenden Kräfte Auftriebskraft (20) und Widerstandskraft (21) sind und wobei die physikalische Größe des Ruders eine Biegespannung und/oder ein Drehmoment ist.

8. Verfahren gemäß Anspruch 7,
**dadurch gekennzeichnet,**
**dass** zwei Messeinrichtungen (27, 28) am Ruderkoker (30) und/oder am Ruderschaft (40) vorgesehen sind und dass auf Basis der Messwerte der einen Messeinrichtung (27) die Auftriebskraft (20) des Ruders (10) und auf Basis der Messwerte der anderen Messeinrichtung (28) die Widerstandskraft (21) des Ruders (10) bestimmt wird.

9. Verfahren gemäß Anspruch 7 oder 8,
**dadurch gekennzeichnet,**
**dass** während des Betriebs des Wasserfahrzeuges die auf das Ruder (10) wirkenden Kräfte kontinuierlich ermittelt werden.

10. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren gemäß einem der Ansprüche 7 bis 9, gegebenenfalls im Zusammenspiel mit einer Anordnung (12) gemäß einem der Ansprüche 1 bis 6, durchzuführen.

11. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 7 bis 9, gegebenenfalls im Zusammenspiel mit einer Anordnung (12) gemäß einem der Ansprüche 1 bis 6, durchzuführen.

## Claims

1. An arrangement (12) for determining the forces acting on a rudder (10), in particular a spade rudder, for watercraft, in particular ships, comprising a computing unit (29), at least one measuring device (27, 28) for determining values of a physical quantity of a rudder, and means for transmitting the detected values of the physical quantity to the computing unit (29), wherein the computing unit (29) is configured for determining the forces acting on the rudder (10) on the basis of the determined values of the physical quantity, **characterized in that** the at least one measuring device (27, 28) is arranged at the rudder (10), wherein the forces acting on the rudder are lift (20) and drag (21), and wherein the physical quantity of the rudder is a bending stress and/or a torque.

2. Arrangement according to claim 1, **characterized in that** the at least one measuring device (27, 28) is configured for determining the bending stress acting on a rudder trunk (30) and/or a rudder stock (40) of a rudder (10), and/or that the at least one measuring device (27, 28) is configured for determinings the torque acting on a rudder stock (40) of a rudder (10).

3. Arrangement according to claim 2, **characterized in that** the at least one measuring device (27, 28) is arranged at the rudder trunk (30), in particular at the inner surface of the rudder trunk (30) and/or the rudder stock (40), in particular at the outer surface of the rudder stock (40).

4. Arrangement according to claim 3, **characterized in that** the at least one measuring device (27; 28) is arranged in an upper region of the rudder trunk (30) and/or of the rudder stock (40), preferably in the upper half, particularly preferably in the upper third.

5. Arrangement according to claim 3 or 4, **characterized in that** two measuring devices (27, 28) are provided at the rudder trunk (30) and/or the rudder stock (40), wherein the measuring devices (27, 28) are arranged offset to each other by 80 ⁰ to 100 °, in particular substantially by 90 °, in relation to the circumference of the rudder trunk (30) or of the rudder stock (40).

6. Arrangement according to one of the preceding claims, **characterized in that** the at least one measuring device (27, 28) comprises a strain gauge, optical measuring means, and/or means for measuring oscillation frequencies.

7. A method for determining forces acting on a rudder (10), in particular a spade rudder, for watercraft, in particular ships, in which at least one value of a physical quantity of a rudder (10) is determined by means of at least one measuring device (27, 28), wherein the at least one determined value is transmitted to a computing unit (29), and wherein the forces acting on the ruder (10) are determined by means of the computing unit (29) on the basis of the at least one determined value, **characterized in that** the measurement is performed by means of the at least one measuring device (27, 28) at the rudder (10), in particular at the rudder trunk (30) and/or the rudder stock (40) of the rudder (10), wherein the forces acting on the rudder are lift (20) and drag (21) and wherein the physical quantity of the rudder is a bending stress and/or a torque.

8. The method according to claim 7, **characterized in that** two measuring devices (27, 28) are provided at the rudder trunk (30) and/or the rudder stock (40) and that the lift (20) of the rudder (10) is determined on the basis of the measured values of one measuring device (27), and the drag (21) of the rudder (10) is determined on the basis of the measured values of the other measuring device (28).

9. The method according to claim 7 or 8, **characterized in that** the forces acting on the rudder (10) are continuously determined during the operation of the watercraft.

10. A computer program product comprising a computer-readable storage medium on which a program is stored which, after having been loaded into the memory of the computer, enables a computer to perform a method according to one of claims 7 to 9, optionally in combination with an arrangement (12) according to one of claims 1 to 6.

11. A computer-readable storage medium on which a program is stored which, after having been loaded into the memory of the computer, enables a computer to perform a method according to one of claims 7 to 9, optionally in combination with an arrangement (12) according to one of claims 1 to 6.

## Revendications

1. Agencement (12) destiné à déterminer des forces agissant sur un gouvernail (10), en particulier gouvernail à suspension totale, pour des bateaux, en particulier des navires, comprenant une unité de calcul (29), au moins un dispositif de mesure (27, 28) destiné à déterminer des valeurs d'une grandeur physique d'un gouvernail et des moyens destinés à transmettre les valeurs déterminées de la grandeur physique à l'unité de calcul (29), l'unité de calcul (29) étant constituée pour déterminer les forces agissant sur le gouvernail (10) sur la base des valeurs déterminées de la grandeur physique, **caractérisé en ce que** l'au moins un dispositif de mesure (27, 28) est disposé sur le gouvernail (10), les forces agissant sur le gouvernail étant la force de poussée (20) et la force de résistance (21) et la grandeur physique du gouvernail étant une contrainte de flexion et/ou un couple.

2. Agencement selon la revendication 1,
**caractérisé en ce que** l'au moins un dispositif de mesure (27, 28) est constitué pour déterminer la contrainte de flexion agissant sur un trou de jaumière (30) et/ou un arbre de gouvernail (40) d'un gouvernail (10), et/ou
**en ce que** l'au moins un dispositif de mesure (27, 28) est constitué pour déterminer le couple agissant sur un arbre de gouvernail (40) d'un gouvernail (10).

3. Agencement selon la revendication 2,
**caractérisé en ce que**
l'au moins un dispositif de mesure (27, 28) est disposé sur le trou de jaumière (30), en particulier sur la gaine intérieure du trou de jaumière (30) et/ou sur l'arbre de gouvernail (40), en particulier sur la gaine extérieure de l'arbre de gouvernail (40).

4. Agencement selon la revendication 3,
**caractérisé en ce que**
un dispositif de mesure (27, 28) est disposé dans une zone supérieure du trou de jaumière (30) et/ou de l'arbre de gouvernail (40), de préférence dans la moitié supérieure, de façon privilégiée dans le tiers supérieur.

5. Agencement selon la revendication 3 ou 4,
**caractérisé en ce que**
deux dispositifs de mesure (27, 28) sont prévus sur le trou de jaumière (30) et/ou sur l'arbre de gouvernail (40), les dispositifs de mesure (27, 28) étant disposés de façon décalée l'un par rapport à l'autre de 80° à 100°, en particulier pour l'essentiel de 90°, en se référant à la périphérie du trou de jaumière (30) ou de l'arbre de gouvernail (40).

6. Agencement selon l'une quelconque des revendications précédentes,
**caractérisé en ce que**
l'au moins un dispositif de mesure (27, 28) comprend une jauge extensométrique, des moyens de mesure optiques et/ou des moyens de mesure des fréquences des oscillations.

7. Méthode destinée à déterminer les forces agissant sur un gouvernail (10), en particulier gouvernail à suspension totale pour des bateaux, en particulier des navires, pour laquelle au moins une valeur d'une grandeur physique d'un gouvernail (10) est déterminée au moyen d'au moins un dispositif de mesure (27, 28), pour laquelle au moins une valeur déterminée est transmise à une unité de calcul (29) et pour laquelle des forces agissant sur le gouvernail (10) sont déterminées au moyen de l'unité de calcul (29) sur la base d'au moins une valeur déterminée, **caractérisée en ce que** la mesure est effectuée au moyen de l'au moins un dispositif de mesure (27, 28) sur le gouvernail (10), en particulier sur le trou de jaumière (30) et/ou sur l'arbre de gouvernail (40) du gouvernail (10), pour laquelle les forces agissant sur le gouvernail sont la force de poussée (20) et la force de résistance (21) et pour laquelle la grandeur physique du gouvernail est une contrainte de flexion et/ou un couple.

8. Agencement selon la revendication 7,
**caractérisé en ce que**
deux dispositifs de mesure (27, 28) sont prévus sur le trou de jaumière (30) et/ou sur l'arbre de gouvernail (40) et **en ce que** la force de poussée (20) du gouvernail (10) est déterminée sur la base des valeurs de mesure d'un dispositif de mesure (27) et la force de résistance (21) du gouvernail (10) est déterminée sur la base des valeurs de mesure de l'autre dispositif de mesure (28).

9. Agencement selon la revendication 7 ou 8,
**caractérisé en ce que**
pendant le fonctionnement du bateau, les forces agissant sur le gouvernail (10) sont déterminées de façon continue.

10. Produit de programme informatique, comprenant un support de mémorisation lisible par ordinateur sur lequel un programme est mémorisé, permettant, après que celui-ci a été chargé dans la mémoire de l'ordinateur, à un ordinateur d'exécuter une méthode selon l'une quelconque des revendications 7 à 9, le cas échéant en intervention simultanée avec un agencement (12) selon l'une quelconque des revendications 1 à 6.

11. Support de mémorisation lisible par ordinateur sur lequel un programme est mémorisé, permettant, après que celui-ci a été chargé dans la mémoire de l'ordinateur, à un ordinateur d'exécuter une méthode selon l'une quelconque des revendications 7 à 9, le cas échéant en intervention simultanée avec un agencement (12) selon l'une quelconque des revendications 1 à 6.
